(19) Europäisches Patentamt
European Patent Office
Office européen des brevets

(11) EP 3 744 763 B1

(12) EUROPÄISCHE PATENTSCHRIFT

(45) Veröffentlichungstag und Bekanntmachung des Hinweises auf die Patenterteilung:
**14.08.2024 Patentblatt 2024/33**

(21) Anmeldenummer: **20174360.6**

(22) Anmeldetag: **13.05.2020**

(51) Internationale Patentklassifikation (IPC):
***C08G 77/46*** (2006.01) ***C08G 77/14*** (2006.01)
***C08G 77/16*** (2006.01) ***C08L 83/12*** (2006.01)

(52) Gemeinsame Patentklassifikation (CPC):
**C08G 77/46; C08G 77/14; C08G 77/16; C08L 83/12**

(54) **MASSGESCHNEIDERTE SIOC BASIERTE POLYETHERSILOXANE**

TAILORED SIOC-BASED POLYETHER SILOXANES

POLYETHÉRSILOXANES À BASE DE SIOC CONÇUS SUR MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2019 EP 19176888**

(43) Veröffentlichungstag der Anmeldung:
**02.12.2020 Patentblatt 2020/49**

(73) Patentinhaber: **Evonik Operations GmbH**
**45128 Essen (DE)**

(72) Erfinder:
- **Favresse, Philippe**
  **40880 Ratingen (DE)**
- **Fiedel, Michael**
  **45239 Essen (DE)**
- **Brötzmann, André**
  **45130 Essen (DE)**
- **Knott, Wilfried**
  **45355 Essen (DE)**
- **Dudzik, Horst**
  **45326 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 3 438 158**
**EP-A1- 3 492 513**
**US-A- 4 066 680**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**Beschreibung**

Die Erfindung betrifft ein Verfahren zur Herstellung von SiOC-basierten Polyethersiloxanen, ausgehend von Acetoxysiloxanen sowie deren Verwendung als Bestandteile in grenzflächenaktiven Substanzen, wie PU-Schaumstabilisatoren, Entschäumern, Entlüftern, in Emulgatoren, in Dismulgatoren und in Lack- und Verlaufsadditiven.

Die Begriffe "Siloxane" und "Polysiloxane", ungeachtet als Wortbestandteil oder alleinstehend, werden als Synonyme in der vorliegenden Erfindung verstanden.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkteigenschaften fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges bilden, die Produktionszeiten verlängern oder aber das Effektivvolumen der Anlage vermindern bzw. deren korrekte Arbeit sogar verhindern können, indem ein Überlaufen der Formulierung aus dem Mischkessel nicht vermieden werden kann und beim Applizieren dieser eine fehlende Farbübertragung unvermeidlich ist.

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen und Luftinklusionen im Lack unterdrücken. In der Praxis müssen diese Aspekte mindestens genauso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität des Entschäumers in Formulierungen von hoher Bedeutung, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

Dem Stand der Technik gemäße Entschäumer sind zum Beispiel Silikonöle, native Öle, Paraffin- und Mineralöle, aber auch hydrophobe Polyoxyalkylene, langkettige Alkohole sowie Mischungen dieser Produkte untereinander und Emulsionen daraus.

Entschäumer zur Entschäumung wässriger und nichtwässriger Medien, die als die Entschäumung maßgeblich beeinflussenden Wirkstoff Polyoxyalkylen Polysiloxan Polymerisate enthalten, zeigen eine besondere Wirksamkeit und Lagerstabilität. Dazu zählen sowohl die Schauminhibierung, die Entschäumung, die sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Zur Verstärkung der Wirksamkeit werden häufig noch sogenannte hydrophobe Festkörper in Mengen von 0,1 bis 10 Gew.-% zugegeben, die Entnetzungsvorgänge gezielt an Schaumlamellen fördern und somit den Schaumzusammenbruch sehr wirksam unterstützen. Geeignete hydrophobe Festkörper sind entsprechende hydrophobierte oder nicht hydrophobierte Kieselsäuren, hydrophobierte oder nicht hydrophobierte Fällungskieselsäure, Metallcarboxylate wie Metallstearate, Polyolefine und natürliche oder synthetische Wachse wie Paraffinwachse, Polyolefinwachse, Amidwachse und Harnstoff oder Poly(Harnstoffe), wie z.B. in der DE 28 29 906 A1 beschrieben.

Durch Zusatz geeigneter Emulgatoren oder Schutzkolloide können solche Entschäumerformulierungen auch in wässrige Emulsionen überführt werden, die anwendungstechnisch einfacher in Lackformulierungen additiviert werden können. In der CN 101100515 A wird auf ein spezifisches Emulgierverfahren eingegangen, das ebenfalls für die Emulgierung der Polyether Polysiloxan Polymerisate verwendet werden kann.

Es ist ebenfalls bekannt, Polyoxyalkylen Polysiloxan Blockmischpolymerisate als Entschäumungsmittel zu verwenden. So ist beispielsweise in der DE 1 012 602 Polyoxyalkylen Polysiloxan Polymerisate beschrieben, die eine A'-B'-A' Struktur aufweisen, wobei mit A' die Polyoxyalkylenblöcke und mit B' ein Polysiloxanblock bezeichnet ist. Diese Aktivstoffe werden der sogenannten SiOC Polyethersiloxan Entschäumer Substanzklasse zugeordnet.

In der DE 24 43 853 werden entschäumendwirkende Zubereitungen beschrieben, die neben linearen auch verzweigte Polyoxyalkylen Polysiloxan Blockcopolymere enthalten.

In der US 4,028,218 ist ein Verfahren zum Verhindern bzw. Zerstören von Schaum in wässrigen Lösungen oder Dispersionen beschrieben, wobei man sich einer ähnlichen Zubereitung, wie sie in der DE 24 43 853 beschrieben ist, bedient. Die Zubereitung unterscheidet sich im Wesentlichen durch einen zusätzlichen Gehalt an organischem Öl, welches ebenfalls entschäumend wirkt. Geeignete organische Öle sind die Ester von Alkoholen und Fettsäuren, wie z.B. pflanzliche oder tierische Öle, oder Mineralöle, Polybutadienöle oder Polypropylenglykole.

Zur Herstellung der wirtschaftlich bedeutsamen Substanzklasse der SiOC-verknüpften Polyethersiloxane, auch als Siliconpolyether oder Polysiloxan Polyether Copolymere bezeichnet, bedient man sich nach heutigem Stand der

Technik mehrerer Verfahrensvarianten.

Dem Fachmann ist bekannt, dass es bei diesen SiOC-verknüpften Polyethersiloxanen um eine Produktklasse handelt, die nicht zum Verharzen neigen. Auch wenn SiOC-verknüpfte Polyethersiloxane reaktive Gruppen, wie etwa Hydroxygruppen, enthalten, so werden sie nicht zur gezielten Vernetzung eingesetzt. Sie sind nicht filmbildend im Gegensatz zu Silikonharzen.

Klassischerweise werden SiOC-verknüpfte Polyethersiloxane durch die Reaktion eines Polysiloxans mit einer am Siliciumatom gebundenen Abgangsgruppe (z.B. Halogen) und einem Alkohol oder Polyetherol gebildet. Letzterer wird üblicherweise zuvor durch Alkoxylierung von hydroxyfunktionellen Startverbindungen wie zum Beispiel Methanol, Butanol oder Glykol mit Alkylenoxiden gewonnen. Besonders Chlor als Abgangsgruppe an dem Siliciumatom ist als Ausgangsverbindungen für diesen Reaktionstyp bekannt und weit verbreitet. Chlorsiloxane und Chlorpolysiloxane sind jedoch schwierig zu handhaben, da sie äußerst reaktiv sind. Ihr Einsatz ist weiterhin mit dem Nachteil verbunden, dass der im Verlauf der Reaktion gebildete Chlorwasserstoff korrosionsbeständige Anlagen erfordert und sowohl zu technischen als auch zu ökologischen Herausforderungen führt. Darüber hinaus können in Gegenwart von Chlorpolysiloxanen und Alkoholen bzw. Polyetherolen organische Chlorverbindungen entstehen, die aus toxikologischen Gründen unerwünscht sind, so dass im Herstellungsprozess die Erfordernisse bestanden, diese zu unterdrücken und zu vernichten. Wie dem Fachmann bekannt ist es weiterhin erforderlich, bei der Reaktion eines Chlorsiloxans mit einem Alkohol oder Polyetherolen einen quantitativen Umsatz zu erreichen und zu sichern, so dass die OH-funktionelle Komponente oft in einem stöchiometrischen Überschuss bezogen auf die Chlor Abgangsgruppe der Polysiloxankomponente eingesetzt werden muss. Die Verwendung eines Polyetherüberschusses bedeutet in der Praxis, dass in den so hergestellten Polyethersiloxanen unvermeidbar größere Mengen an unreagierten Überschusspolyethern enthalten sind, die die Konzentration der wirksamen Polyethersiloxan Komponente herabsetzen und die anwendungstechnischen Eigenschaften der Polyethersiloxane beeinträchtigen. Häufig müssen zusätzlich beim oben beschriebenen Verfahren HCl-Fänger eingesetzt werden, um entsprechende quantitative Umsätze zu erzielen. Durch Einsatz HCl-Fänger entstehen große Salzmengen, deren Entfernung im industriellen Maßstab Schwierigkeiten verursachen.

Als Alternative zu diesem Verfahren bietet sich an, Alkohole oder Polyetherole mit Wasserstoffsiloxanen umzusetzen, in denen Wasserstoff direkt am Silicium gebunden ist. Unter geeigneten Bedingungen kommt es hier bei Ausbildung der SiOC-Bindung lediglich zur Abspaltung von Wasserstoff. Dieses Verfahren, bekannt als dehydrogenative Kondensation, ist ausschließlich nur in Anwesenheit eines Katalysators durchführbar. US 5,147,965 verweist auf ein Verfahren, das in der japanischen Patentveröffentlichung JPS 4819941 beschrieben wird, bei dem ein Wasserstoffsiloxan mit einem Alkohol unter Zugabe von Alkalimetallhydroxiden oder Alkalimetallalkoxiden umgesetzt wird. Nachteilig an diesem Verfahren ist, dass die Katalysatoren nach beendeter Reaktion neutralisiert werden müssen und die dabei entstehende Salzfracht zwar deutlich geringer als die des Chlorsiloxanverfahrens ist, aber dennoch erfordert aufwändig abfiltriert werden muss.

EP 0 475 440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. Da sowohl Toluol als auch Säure im Endprodukt unerwünscht sind, müssen diese nach Reaktionsende wiederum entfernt werden. Platinsalze sind zudem nicht nur teuer, sondern aus physiologischer Sicht auch nicht unbedenklich. Gerade im Bereich der kosmetischen Industrie gibt es den Wunsch nach Platinfreien Produkten.

Ohne den Einsatz von Schwermetallen kommt das in J. Boyer, R. J. P. Corriu, R. Perz, C. Reye, J. Organomet. Chem. 1978, 157, 153-162 beschriebene Verfahren aus. Dabei werden Salze wie z.B. Kaliumtartrat, -phthalat oder -formiat als heterogene Katalysatoren eingesetzt. Die Umsetzungen erfordern allerdings den äquimolaren Einsatz der Salze bezogen auf die SiH-Einheiten und gelingen nur bei hohen Temperaturen von ca. 180 °C. Sowohl die drastischen Bedingungen als auch die notwendigen großen Salzmengen machen dieses Verfahren für den technischen und industriellen Maßstab unattraktiv.

In den Patentanmeldungen DE 10 312 636 und DE 10 359 764 werden borhaltige Katalysatoren für die dehydrogenative Kondensation von Wasserstoffsiloxanen und Alkoholen eingesetzt. So attraktiv diese dehydrogenativen Verfahren zur SiOC-Verknüpfung gerade in Bezug auf die Vermeidung flüssiger und/ oder fester Nebenprodukte auch sind, so stehen sowohl der Einsatz kostspielige und toxische Katalysatoren, wie zum Beispiel Tris(pentafluorophenyl)-boran, als auch die sichere Handhabung des bei der Synthese entstehenden Wasserstoffgases einer breiten Anwendung der Technologie im industriellen Maßstab entgegen.

Die Synthese von Polyethersiloxanen erfolgt daher durch die Anknüpfung von Polyether an einer Polysiloxankette über eine Si-OC oder Si-C Bindung. Die Chemie bietet an dieser Stelle vielfältige Möglichkeiten an verschiedenen Polyethersiloxan Strukturen. Dementsprechend sind nicht nur lineare Strukturen herstellbar, die in zwei Unterklassen unterteilt werden: die A-B-A Triblockcopolymer Strukturen und die A-(B-A)x Multiblockcopolymer Strukturen, sondern auch leicht oder stark verzweigte Copolymerstrukturen und kammartige Copolymere synthetisierbar.

Aus dem Stand der Technik sind zahlreiche Syntheseverfahren bekannt. Beispielsweise offenbart die EP 2094761 B1 die Herstellung von Polyoxyalkylen Polysiloxan Blockpolymerisaten durch die Umsetzung von Polyetheralkoholen mit Chlorpolysiloxanen als Ausgangsverbindungen.

Bezugnehmend auf die EP 3467006 A1 sowie die bisher unveröffentlichen europäischen Patentanmeldungen mit den Anmeldeaktenzeichen EP 18172882.5, EP 18172876.7 und EP 17204277.2, die sich der Herstellung SiOC-verknüpfter Polyethersiloxane widmen, wobei als reaktive Zwischenstufen mit trifluormethansulfonsaure, äquilibrierte Acetoxysiloxane des linearen bzw. auch des verzweigten Strukturtyps verwendet werden, stellt die Lehre der ebenfalls unveröffentlichten europäischen Patentanmeldung EP 18189073.2 auf ein Verfahren zur Herstellung mit trifluormethansulfonsaurer, endäquilibrierter, Acetoxygruppen-tragende Polysiloxane ab, bei welchem man zyklische Siloxane, insbesondere umfassend $D_4$ und/oder Ds, und/oder Mischungen zyklisch-verzweigter Siloxane vom D/T-Typ unter Einsatz von Trifluormethansulfonsäure als Katalysator mit Acetanhydrid und unter Zusatz von Essigsäure umsetzt.

Die noch nicht offengelegten europäischen Patentanmeldungen mit Anmeldeaktenzeichen EP 17204277.2, EP 18189072.4 und EP 18189074.0 stellen auf Verfahren zur Herstellung von Acetoxy-modifizierten Siloxanen ab, bei denen DT-Siloxanzyklen respektive einfache, nur D-Einheiten enthaltende Siloxanzyklen als Edukte eingesetzt werden.

Die EP 17204277.2 bezieht sich auf ein Verfahren zur Herstellung von im Siloxanteil verzweigten, SiOC-verknüpften Polyethersiloxanen ausgehend von Mischungen zyklisch-verzweigter Polysiloxane vom D/T-Typ, indem man in einem ersten Schritt zyklische-verzweigte Siloxane vom D/T-Typ säurekatalysiert mit Acetanhydrid ggf. in Abmischung mit einfachen Siloxanzyklen zu Acetoxygruppen-tragenden, verzweigten Polysiloxanen umsetzt und in einem zweiten Schritt die Äquilibrierung des Acetoxy-modifizierten verzweigten Polysiloxans mit Trifluormethansulfonsäure durchführt und in einem dritten Schritt das Trifluormethansulfonsäure Acetoxysiloxan ggf. in Gegenwart von Basen und ggf. in Gegenwart eines inerten Lösungsmittels mit Polyetherolen umsetzt. Das hierbei gewonnene, verzweigte Acetoxysiloxan enthält pro Mol Si-gebundener Acetoxyfunktion neben eingesetzter Trifluormethansulfonsäure auch noch etwa 0,10 Mol freien Essigsäureanhydrids.

Keine verzweigten, sondern lineare SiOC-verknüpfte Silikonpolyetherstrukturen anstrebend, führen die noch nicht offengelegten europäischen Patentanmeldungen mit Anmeldeaktenzeichen EP 18189072.4 und EP 18189074.0 hierzu aus, dass äquilibrierte $\alpha,\omega$-Diacetoxy-polydimethylsiloxane durch die Umsetzung von Siloxanzyklen ($D_4$/$D_5$) mit Acetanhydrid in Gegenwart von Trifluormethansulfonsäure hergestellt werden, indem man unter guter Durchmischung der Reaktanden diese mit 0,1 bis 0,3 Massenprozent Trifluormethansulfonsäure bezogen auf die gesamte Reaktionsmasse beaufschlägt und dann auf Temperaturen von 140 bis 160°C für die Dauer von 4 bis 8 Stunden erhitzt. Hierbei wird aus der anfänglich leicht trüben Reaktionsmischung ein klares, äquilibriertes Trifluormethansulfonsäure katalysiertes $\alpha,\omega$-Diacetoxy-polydimethylsiloxan erhalten, das neben eingesetzter Trifluormethansulfonsäure auch 0,125 Mol freien Acetanhydrids bezogen auf das im $\alpha,\omega$-Diacetoxy-polydimethylsiloxan chemisch gebundene Acetanhydrid-Äquivalent, enthält.

Die noch nicht offengelegte Europäische Patentanmeldung EP18210035.4 beschreibt (i) Reaktionssysteme zur Herstellung Acetoxyfunktionen tragender Siloxane, umfassend a) Alkoxygruppen tragende Silane und/oder Siloxane und/oder b) Acetoxygruppen tragende Silane und/oder Siloxane, c) Hydroxygruppen tragende Silane und/oder Siloxane c) ggf. einfache Siloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung linearer oder verzweigter Acetoxyfunktionen tragender Siloxane sowie deren Verwendung zur Herstellung von Polyethersiloxanen.

Gemäß oben bezeichneter Anmeldung ist es z.B. möglich, zu einem terminale Acetoxygruppen tragenden, linearen oder verzweigten Polysiloxan zu gelangen, indem man ein terminale

Alkoxygruppen tragendes, lineares Polysilikonäquilibrat (=Voräquilibrat) als alleinigen Reaktanden mit einem Reaktionsmedium bestehend aus Essigsäureanhydrid, Trifluormethansulfonsäure und Essigsäure zur Umsetzung bringt.

Dem Fachmann ist weiterhin bekannt, dass das Polysiloxan für die Grenzflächenaktivität verantwortlich ist, während über den Polyether die Verträglichkeit mit dem Lacksystem gesteuert und dementsprechend beeinflusst wird. Welche Polyethersiloxan-Strukturen die besten anwendungstechnischen Eigenschaften ermöglichen, muss laut heutigem Stand immer praktisch bestimmt werden, weil es immer von der Zusammensetzung des zu entschäumenden Mediums abhängig ist.

Das Dokument EP3438158 A1 offenbart die Herstellung von Polyethersiloxanen durch ein Verfahren, bei dem Alkoxysiloxane mit Polyetherolen in Gegenwart eines Zinkkatalysators umgesetzt werden.

Wünschenswert ist es daher, ein Verfahren bereitzustellen, mit dem definierte Polyetherpolysiloxan-Strukturen einfach und ohne die aus dem Stand der Technik bekannte Nachteile herstellen lassen.

Basierend auf die Lehre der Europäischen Patentanmeldung EP 18210035.4 schlägt die vorliegende Erfindung ein Verfahren zur Herstellung SiOC-basierter Polyethersiloxane, ausgehend von linearen $\alpha,\omega$-Hydroxygruppen tragenden Polysiloxanen, wobei man

- in einem ersten Schritt $\alpha,\omega$-Acetoxygruppentragende, lineare Polysiloxane herstellt,
- in einem zweiten Schritt die $\alpha,\omega$-Acetoxygruppentragenden, linearen Polysiloxane mit gewünschten Organosiloxaneinheiten überführt, bevorzugt wird die Anzahl an Organosiloxaneinheiten in der Polysiloxankette reduziert, wobei

die derart überführten α,ω-Acetoxygruppentragenden, linearen Polysiloxane α,ω-Acetoxygruppen aufweisen, und
- in einem dritten Schritt die α,ω-Acetoxygruppentragenden, linearen Polysiloxane aus Schritt 2 mit Polyetherolen zu SiOC basierte Polyethersiloxane umsetzt,

vor.

Überraschend konnte festgestellt werden, dass die erfindungsgemäße Verfahrensführung geeignet ist für die Herstellung von maßgeschneiderten SiOC basierten Polyethersiloxanen.

Besonders überraschend ist hierbei, dass man die Länge der Polysiloxankette vor der Umsetzung mit Polyetherolen beeinflussen kann. Kommerziell erhältliche lineare α,ω-Hydroxygruppen tragende Polysiloxane weisen eine relativ lange Polysiloxankette auf, die für die Umsetzung mit Polyetherolen hinsichtlich der geforderten anwendungstechnischen Eigenschaften im zu entschäumenden Medium angepasst werden müssen.

Vorzugsweise wird ein Verfahren vorgeschlagen, bei dem man

- in einem ersten Schritt lineare α,ω- Hydroxygruppen tragende Polysiloxane mit Acetanhydrid zu Acetoxygruppentragenden, linearen Polysiloxanen umsetzt,
- in einem zweiten Schritt die Äquilibrierung der Acetoxy-modifizierten linearen Polysiloxane aus Schritt 1 mit einer Mischung enthaltend Acetanhydrid und Säuren, vorzugsweise Supersäuren, durchführt, um α,ω-Acetoxygruppentragende, lineare Polysiloxane mit gewünschten Organosiloxaneinheiten zu erhalten.

Geeignete Menge an Acetanhydrid und Säuren im zweiten Schritt kann der Fachmann aus seinem Fachwissen entnehmen, hierbei soll er darauf achten, dass die überführten α,ω-Acetoxygruppentragenden, linearen Polysiloxane α,ω-Acetoxygruppen aufweisen. Als Hilfsmittel kann er für die Reaktionsverfolgung die $^{29}$Si-NMR-Spektroskopie heranziehen.

Acetanhydrid und Essigsäureanhydrid werden als Synonyme verstanden.

Acetoxy-modifizierte lineare Polysiloxane, α,ω-Acetoxygruppentragende, lineare Polysiloxane und acetylierte lineare Polysiloxane werden im Sinne dieser Erfindung derart verstanden, dass die linearen α,ω-Hydroxygruppen tragenden Polysiloxane α,ω-Acetoxygruppen tragen.

Überraschend wurde gefunden, dass man das Molverhältnis der α,ω-Acetoxygruppentragenden, linearen Polysiloxane aus Schritt 1 mit dem Molverhältnis des Acetanhydrids im Schritt 2 einstellen kann, um die α,ω-Acetoxygruppentragenden, linearen Polysiloxane mit gewünschten Organosiloxaneinheiten zu erhalten.

Völlig überraschend war die Feststellung, dass es eine Gesetzmäßigkeit zwischen der Menge an Acetanhydrid im Schritt 2 und der gewünschten Polysiloxankettenlänge besteht. Beispielsweise bewirkt durch Zugabe von einem Mol Acetanydrid im Schritt 2 zu den α,ω-Acetoxygruppentragenden, linearen Polysiloxanen aus Schritt 1 eine Halbierung des Molekulargewichts des α,ω-Acetoxygruppentragenden, linearen Polysiloxans aus Schritt 1. Es entstehen zwei α,ω-Acetoxygruppentragende, lineare Polysiloxane mit verringertem Molekulargewicht. Bei der Zugabe beispielsweise von 2 Mol Acetanydrid im Schritt 2 zu den α,ω-Acetoxygruppentragenden, linearen Polysiloxanen aus Schritt 1 werden drei α,ω-Acetoxygruppentragende, lineare Polysiloxane mit verringertem Molekulargewicht gebildet.

Bevorzugt kann man mit dem erfindungsgemäßen Verfahren insbesondere im zweiten Schritt aus den α,ω-Acetoxygruppentragenden, linearen Polysiloxanen aus Schritt 1 mit dem Anfangsmolekulargewicht des linearen α,ω-Hydroxygruppen tragenden Polysiloxans zu zwei oder mehreren α,ω-Acetoxygruppentragenden, linearen Polysiloxane mit verringertem Molekulargewicht herstellen bzw. die Anzahl der Organosiloxaneinheiten in der Polysiloxankette reduzieren.

Ohne an einer Theorie gebunden zu sein, folgt die Gesetzmäßigkeit folgender mathematischen Formel für die Anzahl der α,ω-Acetoxygruppentragenden, linearen Polysiloxane nach Schritt 2:

$$K = X + 1$$

mit

K = Anzahl der α,ω-Acetoxygruppentragenden, linearen Polysiloxane mit gewünschten Organosiloxaneinheiten nach Schritt 2
X = Menge an Acetanhydrid (in mol) in Schritt 2.

Für das Molekulargewicht könnte folgende mathematische Formel zugrunde gelegt werden:

$$M = \frac{Y}{X+1}$$

M = Molekulargewicht der $\alpha,\omega$-Acetoxygruppentragenden, linearen Polysiloxane mit gewünschten Organosiloxaneinheiten nach Schritt 2

Y = Molekulargewicht von $\alpha,\omega$-Acetoxygruppentragenden, linearen Polysiloxanen aus Schritt 1

Bevorzugt werden die lineare $\alpha,\omega$- Hydroxygruppen tragende Siloxane verwendet, die zumindest der Formel (I) genügen:

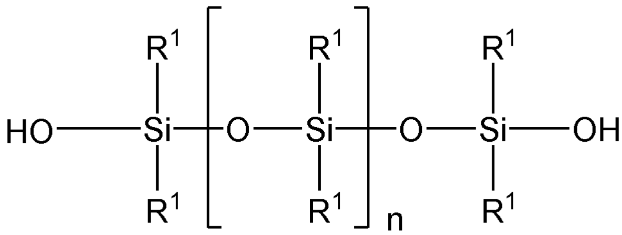

(I)

mit $R^1$ gleich Alkylrest und/oder aromatischer Rest, umfassend 1 bis 10 C-Atome, bevorzugt ein Methylrest und mit $1 \leq n \leq 19.000$, bevorzugt n zwischen 3 und 200, besonders bevorzugt n zwischen 20 und 100.

Demnach weisen die linearen $\alpha,\omega$- Hydroxygruppen tragenden Polysiloxane gemäß Formel (I) eine Kette von periodisch wiederkehrenden Organosiloxaneinheiten, $-(R^1)_2SiO-$; auf. Die $\alpha,\omega$-Hydroxygruppen tragenden Polysiloxane weisen eine Viskosität von 16bis 150.000 mPa*s auf und haben ein entsprechendes Molekulargewicht von 400 bis 139.000 g/mol.

Lineare $\alpha,\omega$- Hydroxygruppen tragende Polysiloxane gemäß Formel (I) sind auch unter dem einfachen Begriff Polysilanole bekannt.

Bevorzugt sind die in Schritt 2 eingesetzten Säuren Supersäuren, die einen pKa-Wert kleiner -3,0 aufweisen, vorzugsweise fluorierte und/ oder perfluorierte Sulfonsäuren, Fluorsulfonsäure $HSO_3F$, Fluor-Antimonsäure $HSbF_6$, Perfluorbutansulfonsäure $C_4F_9SO_3H$ und/oder ganz besonders bevorzugt Trifluormethansulfonsäure $CF_3SO_3H$.

Bevorzugt weisen die im Schritt 2 überführten linearen $\alpha,\omega$-Acetoxygruppentragenden Polysiloxane 5 - 50, bevorzugt 7 - 25, besonders bevorzugt 10 - 20 Organosiloxaneinheiten auf. Die Anzahl der Einheiten wird mittels $^{29}Si$ NMR ermittelt wie dem Fachmann bekannt und in der Fachliteratur bereits beschrieben.

Bevorzugt kann man im zweiten Schritt zusätzlich Alkoxygruppen tragende Silane, vorzugsweise Triethoxy-, Trimethoxy-, Diethoxy-, Dimethoxy-, Tetraethoxy- und/oder Tetramethoxysilan zufügen, um verzweigte $\alpha,\omega$-Acetoxygruppentragende Siloxane zu erhalten.

Es ist somit möglich, ausgehend von linearen Hydroxygruppen tragenden Polysiloxanen auf eleganter und einfacher Weise verzweigte SiOC-basierte Polyethersiloxane herzustellen.

Vorzugsweise wird in einem dritten Schritt das saure, vorzugsweise supersaure $\alpha,\omega$-Acetoxygruppentragende Polysiloxan aus Schritt 2 mit Polyetherolen und/oder Monoolen umgesetzt. Somit lassen sich SiOC-basierte Polyethersiloxanen mit definierten Organosiloxaneinheiten herstellen, die sich für bestimmte Zusammensetzungen als Entschäumer eignen.

Vorzugsweise kann in Schritt 2 Essigsäure zugesetzt werden. Wie aus den oben genannten noch nicht veröffentlichen Patentanmeldungen beschrieben, kann die Essigsäure für die Endäquilibrierung eine wichtige Rolle sein.

Vorzugsweise erfolgt der Austausch der Siloxan gebundenen Acetoxygruppen mindestens in Gegenwart einer Base, insbesondere in Gegenwart von Carbonatsalzen, Ammoniak oder eines organischen Amins, um ggf. die Polykondensation zu fördern, den Katalysator zu neutralisieren und/oder das Endprodukt zu stabilisieren.

Vorzugsweise kann der Austausch der Siloxan gebundenen Acetoxygruppen durch die Umsetzung mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgen, wobei das inerte Lösungsmittel vorteilhafterweise ein aromatisches, bevorzugt alkylaromatisches Lösungsmittel, und ganz besonders bevorzugt ausgewählt aus Toluol, Xylol und Ester ausgewählt aus Methoxypropylacetat, Ethyl- oder Butylacetat.

Bevorzugt kann in einer anderen Ausführungsform der Austausch der Siloxan gebundenen Acetoxygruppen durch die Umsetzung mit Polyetherolen lösemittelfrei erfolgen.

Vorzugsweise werden als Polyetherole solche der Formel (II)

$$A[-O-(CH_2-CHR'-O-)_m-(CH_2-CH_2-O-)_n--(CH_2-CH(CH_3)-O-)_0-Z]_a \quad (II)$$

mit

A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-,iso-Propyl-, Butyl-, iso-Butyl-, Vinyl- oder Allylgruppe ist,
R‘ unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe, dass mindestens A oder Z Wasserstoff repräsentieren,
eingesetzt.

Bevorzugt sind die Monoole ausgewählt aus Ethanol, Propanol, Isopropanol, Butanol, Isobutanol und Polyetherol gemäß der Formel (II), wobei A kein Wasserstoff entspricht.

In einer bevorzugten Ausführung kann man mindestens 1 Mol an Polyether gebundene OH-Funktionalität pro Mol Acetoxygruppe des verzweigten Siloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans einsetzen.

Vorzugsweise wird die Umesterung der Acetoxygruppentragenden Polysiloxane aus Schritt 2 in einem unter Reaktionsbedingungen inerten Lösungsmittel durchgeführt, wobei bevorzugte Lösungsmittel Toluol und/oder die reinen oder als Isomerengemisch vorliegenden Xylole sind, und wobei diese Lösungsmittel bevorzugt in Gesamtmengen von 5 bis 35 Gew.-%, vorzugsweise 10 bis 35 Gew.-%, bezogen auf die Masse der Reaktionsmatrix eingesetzt werden, und wobei der Gesamtwassergehalt der Lösungsmittel $\leq$ 50 Massen-ppm, vorzugsweise $\leq$ 25 Massen-ppm, besonders bevorzugt $\leq$ 10 Massen-ppm beträgt, wobei die Bestimmung des Wassergehaltes durch Titration nach Karl Fischer erfolgt.

Vorzugsweise wird die Umesterungsreaktion im Temperaturbereich von 40 bis 180°C, bevorzugt zwischen 50 und 160°C, besonders bevorzugt zwischen 80 bis 150°C durchgeführt. Vorzugsweise wird die Umesterungsreaktion bei vermindertem Druck und/oder unter Durchleiten eines Inertgases durchgeführt wird.

Ein weiterer Gegenstand der Erfindung ist die beanspruchte Verwendung einer Zubereitung, hergestellt nach dem erfindungsgemäßen Verfahren, enthaltend wenigstens einen SiOC-verknüpften, verzweigten Polysiliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyethers und dass der Anteil des SiOC-verknüpften, verzweigten Siliconpolyethers mindestens 50 Massenprozent bezogen auf die Gesamtzubereitung beträgt.

Diese Verwendung ist zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern.

Auch die Verwendung der erfindungsgemäßen Zubereitung als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen ist vorstellbar.

**Methoden**

Die **$^{29}$Si-NMR-Proben** werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in $CDCl_3$ und gegen Tetramethylsilan (TMS) als externem Standard [d($^{29}$Si) = 0,0 ppm] gemessen.

Die GPC's (**Gel-Permeations-Chromatographie**) werden unter Verwendung von THF als mobiler Phase an einer Säulenkombination SDV 1000/10000A, Länge 65 cm, ID 0,80 bei einer Temperatur von 30°C an einem SECcurity$^2$ GPC System 1260 (PSS Polymer Standards Service GmbH) aufgenommen.

**Herstellung linearer und verzweigter acetoxygruppentragenden Polysiloxane**

**Schritt 1: Herstellung von linearen acetoxygruppentragenden Polysiloxan ausgehend von Polysilanol**

**Beispiel 1A:** In einem 500-ml-Vierhalsrundkolben mit KPG-Rührer, Innenthermometer und aufgesetztem Rückflusskühler werden 300,0g eines Polysilanols mit einem Molekulargewicht von 2742 g/mol mit 22,4g Essigsäureanhydrid (0,22 mol) unter Rühren bei 23°C vorgelegt. Anschließend wird das Gemisch auf 150°C aufgeheizt und 6 Stunden bei Reaktionstemperatur gehalten. Nach der Reaktionszeit wird der Reaktionsansatz auf 23°C abkühlen.
Um das Reaktionsgemisch aufzuarbeiten, wird der Rückflusskühler durch eine Destillationsbrücke ausgetauscht und anschließend wird das Reaktionsgemisch während 2 Stunden unter Vakuum (20 mbar) bei 80°C abdestilliert. Nach Abkühlen des Reaktionsgemisches erhält man ein klares farbloses acetyliertes Polysiloxan.
Erhalten wird ein klares terminales Acetoxygruppentragendes Polysiloxan, dessen Zielstruktur durch die begleitende $^{29}$Si-NMR-Spektroskopie belegt wird. Gleichfalls sichert die $^{29}$Si-NMR-Spektroskopie ab, dass im Rahmen der Messgenauigkeit keinerlei Anteile von SiOH Gruppen zugegen sind.

Überführung des linearen Acetoxypolysiloxans in das entsprechende lineare Isopropoxypolysiloxan zur analytischen Charakterisierung

Unmittelbar nach der Synthese werden 100,0 g dieses trifluormethansulfonsauren, äquilibrierten verzweigten Acetoxypolysiloxans in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.
Isoliert wird eine farblos, klare Flüssigkeit deren begleitendes $^{29}$Si-NMR-Spektrum die quantitative Umwandlung des linearen Acetoxypolysiloxans in ein lineares Isopropoxypolysiloxan belegt.
Ein Aliquot dieses verzweigten Isopropoxpolyysiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 0,22 % | 0,32 % | 0,48 % | 1,02 % | 12,0 % |

Unter Berücksichtigung des Isopropanolüberschusses sind hierbei die Gehalte an Siloxanzyklen ($D_4$, $D_5$ und $D_6$) allein bezogen auf den Polysiloxananteil berechnet.
Analog wurden weitere erfindungsgemäße Acetoxygruppentragenden Polysiloxane mit verschiedenen Polysilanolen gemäß Tabelle 1 hergestellt.

**Tabelle 1:**

| | 1A | 1A* | 1B | 1C | 1D |
|---|---|---|---|---|---|
| Polysilanol A (Mn = 2742 g/mol) | 300,0 g | 300,0 g | | | |
| Polysilanol B (Mn = 5490 g/mol) | | | 300,0 g | | |
| Polysilanol C (Mn = 1371 g/mol) | | | | 300,0 g | |
| Polysilanol D (Mn = 3398 g/mol) | | | | | 300,0 g |
| Acetanhydrid | 22,4 g | 44,7 g | 22,35 g | 89,4 g | 36,0 g |

**Schritt 2: Herstellung von linearen acetoxygruppentragenden Polysiloxan mit gewünschten Organosiloxaneinheiten bzw. verringertem Molekulargewicht**

**Beispiel 2C:** In einem 500-ml-Vierhalsrundkolben mit KPG-Rührer, Innenthermometer und aufgesetztem Rückflusskühler werden 300,0g von dem im Beispiel 1C hergestellten linearen Acetoxy Polysiloxan mit 20,8g Acetanhydrid (0,20 mol) unter Rühren bei 23°C vorgelegt. Anschließend wird das Gemisch auf 150°C aufgeheizt, wobei während dem Aufheizen noch dazu 0,32g Trifluormethansulfonsäure zugegeben werden. Eine Gesamtreaktionszeit von 6 Stunden wird gehalten, und lässt den Reaktionsansatz auf 80°C abkühlen. Bei dieser Temperatur wird dem Reaktionsgemisch 9,6g Natriumcarbonat zugegeben, 6 Stunden geführt und anschließend 2 Stunden bei 80°C unter 20mbar Vakuum ausdestilliert. Die Salze werden mit Hilfe eines Faltenfilters abgetrennt. Nach abkühlen des Reaktionsgemisches erhält man ein klares farblose acetyliertes Polysiloxan.

Die Zielstruktur des klar linearen Acetoxyfunktionennellen tragenden Polysiloxans wird durch die begleitende 29Si-NMR-Spektroskopie belegt. Gleichfalls sichert die 29Si-NMR-Spektroskopie ab, dass im Rahmen der Messgenauigkeit keinerlei Anteile von SiOH Gruppen zugegen sind.

Überführung des linearen Acetoxypolysiloxans in das entsprechende lineare Isopropoxysiloxan zur analytischen Charakterisierung. Ein Molekulargewicht von 737 wird von dem somit hergestellten acetylierten linearen Polysiloxan bestimmt.

Unmittelbar nach der Synthese werden 100,0 g dieses trifluormethansulfonsauren, äquilibrierten linearen Acetoxypolysiloxans in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes $^{29}$Si-NMR-Spektrum die quantitative Umwandlung des linearen Acetoxypolysiloxans in ein lineares Isopropoxypolysiloxan belegt.

Ein Aliquot dieses verzweigten Isopropoxysiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 0,19 % | 0,33 % | 0,39% | 0,91% | 12,10 % |

Unter Berücksichtigung des Isopropanolüberschusses sind hierbei die Gehalte an Siloxanzyklen ($D_4$, $D_5$ und $D_6$) allein bezogen auf den Polysiloxananteil berechnet.

Analog wurden weitere Umsetzungen gemäß den Daten aus Tabelle 2 durchgeführt:

**Tabelle 2:**

| | **2C** | **2B** | **2B*** | **2A** |
|---|---|---|---|---|
| Acetylierter PDMS aus Beispiel 1C (Polysilanol C (Mn = 1371 g/mol)) | 300,0 | | | |
| Acetylierter PDMS aus Beispiel 1B (Polysilanol B (Mn = 5490 g/mol)) | | 300,0 | 300,0 | |
| Acetylierter PDMS aus Beispiel 1A* (Polysilanol A (Mn = 2742 g/mol)) | | | | 300,0 |
| Acetanhydrid | 20,8 | 5,5 | 11,0 | 10,8 |
| Trifluormethansulfonsäure | 0,32 | 0,31 | 0,31 | 0,31 |
| Natriumcarbonat | 9,62 | 9,16 | 9,33 | 9,32 |
| Mn (g/mol) des linearen acetoxygruppentragenden Polysiloxans mit definierten Organosiloxaneinheiten bzw. verkleinertem Molekulargewicht | 737 | 2844 | 1930 | 1472 |

**Schritt 2, modifiziert: Herstellung von einem verzweigten acetoxygruppentragenden Polysiloxan mit gewünschten Organosiloxaneinheiten bzw. verringertem Molekulargewicht**

**Beispiel 2D mod.:** In einem 500-ml-Vierhalsrundkolben mit KPG-Rührer, Innenthermometer und aufgesetztem Rückflusskühlerwerden 300,0g von dem im Beispiel 1D hergestellten linearen Acetoxy Polysiloxan mit 15,3g Methyltriethoxysilan (0,09 mol) und 52,5g Acetanhydrid (0,17 mol) unter Rühren bei 23°C vorgelegt. Anschließend wird das Gemisch auf 150°C aufgeheizt, wobei während dem Aufheizen noch dazu 0,37g Trifluormethansulfonsäure zugegeben werden. Eine Gesamtreaktionszeit von 6 Stunden wird gehalten, und lässt den Reaktionsansatz auf 80°C abkühlen. Bei dieser Temperatur wird dem Reaktionsgemisch 11,04g Natriumcarbonat zugegeben, 6 Stunden geführt und anschließend 2 Stunden bei 80°C unter 20mbar Vakuum ausdestilliert. Die Salze werden mit Hilfe eines Faltenfilters abgetrennt.

Nach abkühlen des Reaktionsgemisches erhält man ein klares farblose acetyliertes verzweigtes Polysiloxan.

Die Zielstruktur des klar verzweigten Acetoxyfunktionennellen tragenden Polysiloxans wird durch die begleitende 29Si-NMR-Spektroskopie belegt. Gleichfalls sichert die 29Si-NMR-Spektroskopie ab, dass im Rahmen der Messgenauigkeit keinerlei Anteile von SiOH Gruppen zugegen sind.

Überführung des verzweigten Acetoxypolysiloxans in das entsprechende verzweigten Isopropoxypolysiloxan zur analytischen Charakterisierung.

Unmittelbar nach der Synthese werden 100,0 g dieses trifluormethansulfonsauren, äquilibrierten verzweigten Acetoxypolysiloxans in einem 250-ml-Vierhalsrundkolben ausgerüstet mit mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks ($NH_3$) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes $^{29}$Si-NMR-Spektrum die quantitative Umwandlung des verzweigten Acetoxypolysiloxans in ein verzweigtes Isopropoxypolysiloxan belegt.

Ein Aliquot dieses verzweigten Isopropoxypolysiloxans wird entnommen und gaschromatographisch analysiert. Das Gaschromatogramm weist folgende Gehalte (Angaben in Massenprozent) auf:

| $D_4$ | $D_5$ | $D_6$ | Summe ($D_4$ - $D_6$) | Isopropanolgehalt |
|---|---|---|---|---|
| 0,23 % | 0,35 % | 0,40 % | 0,98% | 12,30 % |

Unter Berücksichtigung des Isopropanolüberschusses sind hierbei die Gehalte an Siloxanzyklen ($D_4$, $D_5$ und $D_6$) allein bezogen auf den Polysiloxananteil berechnet.

Analog wurden weitere Umsetzungen gemäß den Daten aus Tabelle 3 durchgeführt:

**Tabelle 3:**

| | 2D mod | 2D mod * | 2D mod ** | 2D mod *** |
|---|---|---|---|---|
| Acetylierter PDMS aus Beispiel 1D (Polysilanol D (Mn = 3398 g/mol)) | 300,0 g | 300,0 g | 300,0 g | 300,0 g |
| MTEOS | 15,3 g | 30,5 g | 45,8 g | |
| TEOS | | | | 53,5 g |
| Acetanhydrid | 52,2 g | 52,5 | 78,8 | 84,8 |
| Trifluormethansulfonsäure | 0,37 g | 0,38 | 0,42 | 0,43 |
| Natriumcarbonat | 11,04 g | 11,5 | 12,8 | 13,0 |

**Schritt 3: Austausch der Siloxan gebundenen Acetoxygruppen durch die Umsetzung mit Polyetherolen**

In einem 500-ml-Vierhalskolben mit KPG-Rührer, Innenthermometer und aufgesetztem Rückflusskühler werden 67,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des aus Beispiel 2A hergestellten acetoxygruppentragenden Polysiloxans versetzt.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier).

Die ausgefallenen Salze werden über einen Doppelfaltenfilter von der toluolischen Phase abgetrennt.

Am Rotationsverdampfer bei 70°C Sumpftemperatur und einem angelegten Hilfsvakuum von 1 mbar wird das Rohprodukt destillativ von Toluol befreit.

Man isoliert die nahezu farblose Zubereitung eines SiOC-verknüpften linearen bzw. verzweigten Polyethersiloxans, dessen angestrebte Struktur durch ein $^{29}$Si-NMR-Spektrum abgesichert wird.

## Patentansprüche

1. Verfahren zur Herstellung SiOC basierte Polyethersiloxane ausgehend von linearen α,ω-Hydroxygruppen tragenden Siloxanen, **dadurch gekennzeichnet, dass** man

   - in einem ersten Schritt α,ω-Acetoxygruppentragende, lineare Polysiloxane herstellt,
   - in einem zweiten Schritt die α,ω-Acetoxygruppentragenden, linearen Polysiloxane mit gewünschten Organosiloxaneinheiten überführt, bevorzugt wird die Anzahl an Organosiloxaneinheiten in der Polysiloxankette reduziert, wobei die derart überführten α,ω-Acetoxygruppentragenden, linearen Polysiloxane α,ω-Acetoxygruppen aufweisen, und
   - in einem dritten Schritt die α,ω-Acetoxygruppentragenden, linearen Polysiloxane aus Schritt 2 mit Polyetherolen zu SiOC basierte Polyethersiloxane umsetzt.

2. Verfahren nach Anspruch 1, **dadurch gekennzeichnet, dass** man

   - in einem ersten Schritt lineare α,ω- Hydroxygruppen tragende Polysiloxane mit Acetanhydrid zu Acetoxygruppen-tragenden, linearen Polysiloxanen umsetzt,
   - in einem zweiten Schritt die Äquilibrierung der Acetoxy-modifizierten linearen Polysiloxane aus Schritt 1 mit einer Mischung enthaltend Acetanhydrid und Säuren, vorzugsweise Supersäuren, durchführt, um α,ω-Acetoxygruppentragende, lineare Polysiloxane mit gewünschten Organosiloxaneinheiten zu erhalten.

3. Verfahren nach Anspruch 1 oder 2, **dadurch gekennzeichnet, dass** die lineare α,ω-Hydroxygruppen tragende Siloxane zumindest der Formel (I) genügen:

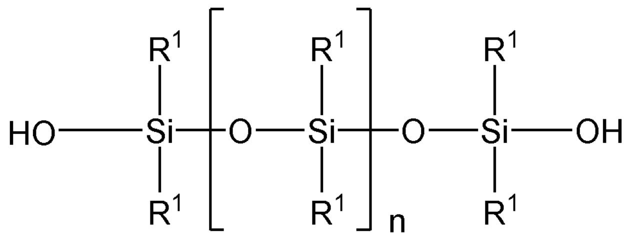

(I)

mit $R^1$ gleich Alkylrest und/oder aromatischer Rest, umfassend 1 bis 10 C-Atome, bevorzugt ein Methylrest und mit $1 \leq n \leq 19.000$, bevorzugt n zwischen 3 und 200, besonders bevorzugt n zwischen 20 und 100.

4. Verfahren nach einem der vorgenannten Ansprüche, **dadurch gekennzeichnet, dass** die in Schritt 2 eingesetzten Säuren Supersäuren sind, die einen pKa-Wert kleiner -3,0 aufweisen, vorzugsweise fluorierte und/ oder perfluorierte Sulfonsäuren, Fluorsulfonsäure $HSO_3F$, Fluor-Antimonsäure $HSbF_6$, Perfluorbutansulfonsäure $C_4F_9SO_3H$ und/oder ganz besonders bevorzugt Trifluormethansulfonsäure $CF_3SO_3H$ umfasst.

5. Verfahren nach einem der vorgenannten Ansprüche, **dadurch gekennzeichnet, dass** die im Schritt 2 überführten linearen α,ω-Acetoxygruppentragenden Polysiloxane 5 - 50, bevorzugt 7 - 25, besonders bevorzugt 10 - 20 Organosiloxaneinheiten aufweisen.

6. Verfahren nach einem der vorgenannten Ansprüche, **dadurch gekennzeichnet, dass** man im zweiten Schritt zusätzlich Alkoxygruppen tragende Silane, vorzugsweise Triethoxy-, Trimethoxy-, Diethoxy-, Dimethoxy-, Tetraethoxy- und/oder Tetramethoxysilan zufügt, um verzweigte α,ω-Acetoxygruppentragende Polysiloxane zu erhalten.

7. Verfahren nach einem der vorgenannten Ansprüche, **dadurch gekennzeichnet, dass** in einem dritten Schritt das saure, vorzugsweise supersaure α,ω-Acetoxygruppentragende, Polysiloxan aus Schritt 2 mit Polyetherolen und/oder Monoolen umgesetzt wird.

8. Verfahren nach einem der vorgenannten Ansprüche, **dadurch gekennzeichnet, dass** in Schritt 2 Essigsäure zugesetzt wird,

9. Verfahren nach einem der vorgenannten Ansprüche, wobei der Austausch der Siloxan gebundenen Acetoxygruppen

mindestens in Gegenwart einer Base, insbesondere in Gegenwart von Carbonatsalzen, Ammoniak oder eines organischen Amins erfolgt.

**10.** Verfahren nach einem der vorgenannten Ansprüche, wobei der Austausch der Siloxan gebundenen Acetoxygruppen durch die Umsetzung mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgt, wobei das inerte Lösungsmittel vorteilhafterweise ein aromatisches, bevorzugt alkylaromatisches Lösungsmittel, und ganz besonders bevorzugt ausgewählt aus Toluol, Xylol und Ester ausgewählt aus Methoxypropylacetat, Ethyl- oder Butylacetat.

**11.** Verfahren nach einem der Ansprüche 1 bis 9, wobei der Austausch der Siloxan gebundenen Acetoxygruppen durch die Umsetzung mit Polyetherolen lösemittelfrei erfolgt.

**12.** Verfahren nach einem der vorgenannten Ansprüche, wobei als Polyetherole vorzugsweise solche der Formel (II)

$$A[-O-(CH_2-CHR'-O-)_m-(CH_2-CH_2-O-)_n--(CH_2-CH(CH_3)-O-)_o-Z]_a \qquad (II)$$

mit

A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-,iso-Propyl-, Butyl-, iso-Butyl-, Vinyl- oder Allylgruppe ist,
R‘ unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist und mit der Maßgabe, dass mindestens A oder Z Wasserstoff repräsentieren,
eingesetzt werden.

**13.** Verfahren nach Anspruch 7, **dadurch gekennzeichnet, dass** die Monoole ausgewählt ausgewählt aus Ethanol, Propanol, Isopropanol, Butanol, Isobutanol und Polyetherol gemäß der Formel (II), wobei A kein Wasserstoff entspricht

**14.** Verfahren nach Anspruch 1 bis 12, wobei man mindestens 1 Mol an Polyether gebundene OH-Funktionalität pro Mol Acetoxygruppe des verzweigten Siloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans einsetzt.

**15.** Verfahren nach einem der vorgenannten Ansprüche, **dadurch gekennzeichnet, dass** die Umesterung der Acetoxygruppentragenden Polysiloxane aus Schritt 2 in einem unter Reaktionsbedingungen inerten Lösungsmittel durchgeführt wird, wobei bevorzugte Lösungsmittel Toluol und/oder die reinen oder als Isomerengemisch vorliegenden Xylole sind, und wobei diese Lösungsmittel bevorzugt in Gesamtmengen von 5 bis 35 Gew.-%, vorzugsweise 10 bis 35 Gew.-%, bezogen auf die Masse der Reaktionsmatrix eingesetzt werden, und wobei der Gesamtwassergehalt der Lösungsmittel $\leq$ 50 Massen-ppm, vorzugsweise $\leq$ 25 Massen-ppm, besonders bevorzugt $\leq$ 10 Massen-ppm beträgt, wobei die Bestimmung des Wassergehaltes durch Titration nach Karl Fischer erfolgt.

**16.** Verfahren nach einem der vorgenannten Ansprüche, **dadurch gekennzeichnet, dass** die Umesterungsreaktion im Temperaturbereich von 40 bis 180°C, bevorzugt zwischen 50 und 160°C, besonders bevorzugt zwischen 80 bis 150°C durchgeführt wird.

**17.** Verfahren nach einem der vorgenannten Ansprüche, **dadurch gekennzeichnet, dass** die Umesterungsreaktion bei vermindertem Druck und/oder unter Durchleiten eines Inertgases durchgeführt wird.

**18.** Verwendung einer nach einem Verfahren der Ansprüche 1 bis 17 hergestellten Zubereitung, enthaltend wenigstens einen SiOC-verknüpften, verzweigten Siliconpolyether, ein Polyetherol und einen mit einer Acetylgruppe endverschlossenen Polyether, mit der Maßgabe, dass der im Siliconpolyether enthaltene Polyetherrest chemisch identisch ist mit dem Polyetherrest des Polyetherols und mit dem Polyetherrest des mit einer Acetylgruppe endverschlossenen Polyethers und dass der Anteil des SiOC-verknüpften, verzweigten Siliconpolyethers mindestens 50 Massenprozent bezogen auf dies Gesamtzubereitung beträgt, zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern.

**19.** Verwendung der Zubereitung nach Anspruch 18 als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen.

## Claims

**1.** Process for preparing SiOC-based polyethersiloxanes proceeding from linear α,ω-hydroxy group-bearing siloxanes, **characterized in that** it comprises

- in a first step, preparing α,ω-acetoxy group-bearing linear polysiloxanes,
- in a second step, converting the α,ω-acetoxy group-bearing linear polysiloxanes with desired organosiloxane units, preferably the number of organosiloxane units in the polysiloxane chain being reduced, wherein the thus converted α,ω-acetoxy group-bearing linear polysiloxanes have α,ω-acetoxy groups, and
- in a third step, reacting the α,ω-acetoxy group-bearing linear polysiloxanes from step 2 with polyetherols to give SiOC-based polyethersiloxanes.

**2.** Process according to Claim 1, **characterized in that** it comprises

- in a first step, reacting linear α,ω-hydroxy group-bearing polysiloxanes with acetic anhydride to give acetoxy group-bearing linear polysiloxanes,
- in a second step, equilibrating the acetoxy-modified, linear polysiloxanes from step 1 with a mixture containing acetic anhydride and acids, preferably superacids, in order to obtain α,ω-acetoxy group-bearing linear polysiloxanes with desired organosiloxane units.

**3.** Process according to Claim 1 or 2, **characterized in that** the linear α,ω-hydroxy group-bearing siloxanes satisfy at least formula (I):

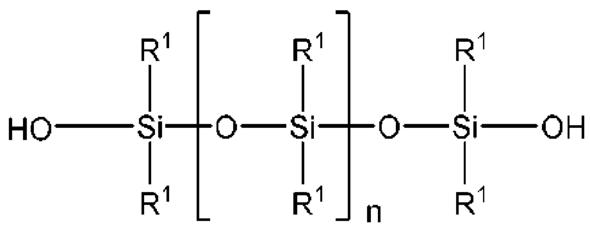

(I)

where $R^1$ is an alkyl radical and/or aromatic radical comprising 1 to 10 carbon atoms, preferably a methyl radical, and where $1 \leq n \leq 19\,000$, preferably n is between 3 and 200, particularly preferably n is between 20 and 100.

**4.** Process according to any of the preceding claims, **characterized in that** the acids used in step 2 are superacids having a pKa of less than -3.0, preferably fluorinated and/or perfluorinated sulfonic acids, fluorosulfonic acid $HSO_3F$, fluoroantimonic acid $HSbF_6$, perfluorobutanesulfonic acid $C_4F_9SO_3H$ and/or very particularly preferably trifluoromethanesulfonic acid $CF_3SO_3H$.

5. Process according to any of the preceding claims, **characterized in that** the linear α,ω-acetoxy group-bearing polysiloxanes converted in step 2 have 5 - 50, preferably 7 - 25, particularly preferably 10 - 20 organosiloxane units.

6. Process according to any of the preceding claims, **characterized in that** in the second step silanes bearing alkoxy groups, preferably triethoxy-, trimethoxy-, diethoxy-, dimethoxy-, tetraethoxy- and/or tetramethoxysilane, are additionally added in order to obtain branched α,ω-acetoxy group-bearing polysiloxanes.

7. Process according to any of the preceding claims, **characterized in that** in a third step the acidic, preferably superacidic, α,ω-acetoxy group-bearing polysiloxane from step 2 is reacted with polyetherols and/or monools.

8. Process according to any of the preceding claims, **characterized in that** acetic acid is added in step 2.

9. Process according to any of the preceding claims, wherein the replacement of the siloxane-bonded acetoxy groups is effected at least in the presence of a base, in particular in the presence of carbonate salts, ammonia or of an organic amine.

10. Process according to any of the preceding claims, wherein the replacement of the siloxane-bonded acetoxy groups via the reaction with polyetherols is effected using an inert solvent, preferably using a solvent which is inert and at the same time forms an azeotrope with formed, and possibly already present, acetic acid, wherein the inert solvent is advantageously an aromatic, preferably alkylaromatic solvent and very particularly preferably selected from toluene, xylene and esters selected from methoxypropyl acetate, ethyl acetate or butyl acetate.

11. Process according to any of Claims 1 to 9, wherein the replacement of the siloxane-bonded acetoxy groups via the reaction with polyetherols is effected without solvent.

12. Process according to any of the preceding claims, wherein the polyetherols used are preferably those of formula (II)

$$A[-O-(CH_2-CHR'-O-)_m-(CH_2-CH_2-O-)_n--(CH_2-CH(CH_3)-O-)_o-Z]_a \qquad (II)$$

where

A is either hydrogen or a saturated or unsaturated organic radical comprising at least one carbon atom, preferably an organic radical, comprising at least one carbon atom, of an organic starter compound for preparing the compound, particularly preferably a methyl, ethyl, propyl, isopropyl, butyl, isobutyl, vinyl or allyl group, R' is independently at each occurrence a saturated alkyl group comprising 2-18 carbon atoms or an aromatic radical, preferably an ethyl group or a phenyl radical respectively,
Z is hydrogen,
m = from 0 to 50, preferably from 0 to 30, particularly preferably from 0 to 20,
n = from 0 to 250, preferably from 3 to 220, particularly preferably from 5 to 200,
o = from 0 to 250, preferably from 3 to 220, particularly preferably from 5 to 200,
a = from 1 to 8, preferably from greater than 1 to 6, particularly preferably 1, 2, 3 or 4, with the proviso that the sum of m, n and o is equal to or greater than 1 and with the proviso that at least A or Z represent hydrogen.

13. Process according to Claim 7, **characterized in that** the monools are selected from ethanol, propanol, isopropanol, butanol, isobutanol and polyetherol of formula (II), where A does not correspond to hydrogen.

14. Process according to Claim 1 to 12, wherein at least 1 mol of polyether-bonded OH functionality is used per mole of acetoxy group of the branched siloxane, preferably 1 to 2 mol of polyether-bonded OH functionality, preferably 1.1 to 1.6 mol of polyether-bonded OH functionality, particularly preferably 1.2 to 1.4 mol of polyether-bonded OH functionality, per mole of acetoxy group of the branched siloxane.

15. Process according to any of the preceding claims, **characterized in that** the transesterification of the acetoxy group-bearing polysiloxanes from step 2 is conducted in a solvent which is inert under reaction conditions, wherein preferred solvents are toluene and/or xylenes present in pure form or as an isomer mixture, and wherein these solvents are preferably used in total amounts of 5% to 35% by weight, preferably 10% to 35% by weight, based on the mass of the reaction matrix, and wherein the total water content of the solvents is ≤ 50 ppm by mass, preferably ≤ 25 ppm by mass, particularly preferably ≤ 10 ppm by mass, wherein the determination of the water content is performed by titration according to Karl Fischer.

**16.** Process according to any of the preceding claims, **characterized in that** the transesterification reaction is conducted in the temperature range from 40 to 180°C, preferably between 50 and 160°C, particularly preferably between 80 to 150°C.

**17.** Process according to any of the preceding claims, **characterized in that** the transesterification reaction is conducted at reduced pressure and/or while passing through an inert gas.

**18.** Use of a preparation prepared by a process of Claims 1 to 17, containing at least one SiOC-bonded, branched silicone polyether, a polyetherol and a polyether end-capped with an acetyl group, with the proviso that the polyether radical present in the silicone polyether is chemically identical to the polyether radical of the polyetherol and to the polyether radical of the polyether end-capped with an acetyl group, and that the proportion of the SiOC-bonded, branched silicone polyether is at least 50 per cent by mass based on the overall preparation, for the preparation of diesel defoamers, of hydrophobicizing agents, of polymer dispersions, of adhesives or sealants, of paper towels, of cleaning and care formulations for household or industrial applications, in particular for the preparation of fabric softeners, of cosmetic, pharmaceutical and dermatological compositions, especially cosmetic cleansing and care formulations, hair treatment agents and hair aftertreatment agents, of building material compositions, of thermoplastic shaped bodies.

**19.** Use of the preparation according to Claim 18 as processing aid in the extrusion of thermoplastics, as adjuvant in crop protection, as additive for the cleaning and care of hard surfaces, for the surface treatment of fibres, particles or fabrics, in particular for the finishing or impregnation of textiles, or in the coating of fillers.

## Revendications

**1.** Procédé de préparation de polyéthersiloxanes à base de SiOC partant de siloxanes linéaires, portant des groupes $\alpha,\omega$-hydroxy, **caractérisé en ce que**

- dans une première étape, on prépare des polysiloxanes linéaires, portant des groupes $\alpha,\omega$-acétoxy,
- dans une deuxième étape, on convertit les polysiloxanes linéaires, portant des groupes $\alpha,\omega$-acétoxy, avec des motifs organosiloxane souhaités, de préférence, le nombre de motifs organosiloxane dans la chaîne polysiloxane est réduit, les polysiloxanes linéaires, portant des groupes $\alpha,\omega$-acétoxy ainsi convertis présentant des groupes $\alpha,\omega$-acétoxy et
- dans une troisième étape, on transforme les polysiloxanes linéaires, portant des groupes $\alpha,\omega$-acétoxy de l'étape 2 avec des polyétherols en polyéthersiloxanes à base de SiOC.

**2.** Procédé selon la revendication 1, **caractérisé en ce que**

- dans une première étape, on transforme des polysiloxanes linéaires portant des groupes $\alpha,\omega$-hydroxy avec de l'anhydride acétique en polysiloxanes linéaires, portant des groupes acétoxy,
- dans une deuxième étape, on réalise l'équilibrage des polysiloxanes linéaires, modifiés par acétoxy, de l'étape 1 avec un mélange contenant de l'anhydride acétique et des acides, de préférence des superacides, afin d'obtenir des polysiloxanes linéaires, portant des groupes $\alpha,\omega$-acétoxy, présentant des motifs organosiloxane souhaités.

**3.** Procédé selon la revendication 1 ou 2, **caractérisé en ce que** les siloxanes linéaires, portant des groupes $\alpha,\omega$-hydroxy satisfont au moins à la formule (I) :

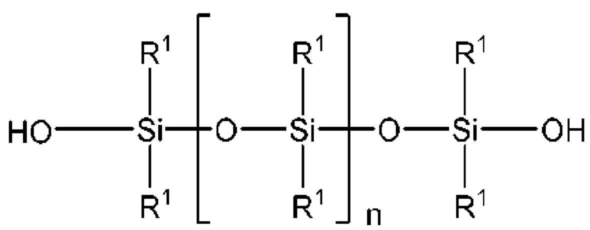

(I)

avec $R^1$ représentant un radical alkyle et/ou un radical aromatique, comprenant 1 à 10 atomes de carbone, de

préférence un radical méthyle et avec $1 \leq n \leq 19\,000$, de préférence n étant situé entre 3 et 200, de manière particulièrement préférée n étant situé entre 20 et 100.

4. Procédé selon l'une des revendications susmentionnées, **caractérisé en ce que** les acides utilisés dans l'étape 2 sont des superacides qui présentent une valeur pKa inférieure à -3,0, de préférence des acides sulfoniques fluorés et/ou perfluorés, l'acide fluorosulfonique $HSO_3F$, l'acide fluoroantimonique $HSbF_6$, l'acide perfluorobutanesulfonique $C_4F_9SO_3H$ et/ou de manière tout particulièrement préférée l'acide trifluorométhanesulfonique $CF_3SO_3H$.

5. Procédé selon l'une des revendications susmentionnées, **caractérisé en ce que** les polysiloxanes linéaires, portant des groupes $\alpha,\omega$-acétoxy convertis dans l'étape 2 présentent 5 - 50, de préférence 7 - 25, de manière particulièrement préférée 10 - 20 motifs organosiloxane.

6. Procédé selon l'une des revendications susmentionnées, **caractérisé en ce qu'**on ajoute, dans la deuxième étape, en outre des silanes portant des groupes alcoxy, de préférence du triéthoxysilane, du triméthoxysilane, du diéthoxysilane, du diméthoxysilane, du tétraéthoxysilane et/ou du tétraméthoxysilane, pour obtenir des polysiloxanes ramifiés, portant des groupes $\alpha,\omega$-acétoxy.

7. Procédé selon l'une des revendications susmentionnées, **caractérisé en ce que**, dans une troisième étape, le polysiloxane acide, de préférence superacide, portant des groupes $\alpha,\omega$-acétoxy de l'étape 2 est transformé avec des polyétherols et/ou des mono-ols.

8. Procédé selon l'une des revendications susmentionnées, **caractérisé en ce que** de l'acide acétique est ajouté dans l'étape 2.

9. Procédé selon l'une des revendications susmentionnées, le remplacement des groupes acétoxy liés au siloxane étant effectué au moins en présence d'une base, en particulier en présence de sels de carbonate, d'ammoniaque ou d'une amine organique.

10. Procédé selon l'une des revendications susmentionnées, le remplacement des groupes acétoxy liés au siloxane étant effectué par la transformation avec des polyétherols avec utilisation d'un solvant inerte, de préférence avec utilisation d'un solvant inerte et formant simultanément un azéotrope avec l'acide acétique qui se forme et le cas échéant déjà présent, le solvant inerte étant avantageusement un solvant aromatique, de préférence alkylaromatique, et de manière tout particulièrement préférée choisi parmi le toluène, le xylène et les esters choisis parmi l'acétate de méthoxypropyle, l'acétate d'éthyle ou l'acétate de butyle.

11. Procédé selon l'une des revendications 1 à 9, le remplacement des groupes acétoxy liés au siloxane étant effectué par la transformation avec des polyétherols, sans solvant.

12. Procédé selon l'une des revendications susmentionnées, dans lequel on utilise comme polyétherols de préférence ceux de formule (II)

$$A[-O-(CH_2-CHR'-O-)_m-(CH_2-CH_2-O-)_n--(CH_2-CH(CH_3)-O-)_o-Z]_a \qquad (II)$$

dans laquelle

A représente soit hydrogène soit un radical organique, présentant au moins un atome de carbone, saturé ou insaturé, de préférence un radical organique présentant au moins un atome de carbone d'un composé de départ organique pour la préparation du composé, de manière particulièrement préférée un groupe méthyle, éthyle, propyle, iso-propyle, butyle, iso-butyle, vinyle ou allyle,
R' représente, indépendamment, un groupe alkyle saturé comprenant 2-18 atomes de carbone ou un radical aromatique, respectivement de préférence un groupe éthyle ou un radical phényle,
Z représente hydrogène,
m vaut 0 à 50, de préférence 0 à 30, de manière particulièrement préférée 0 à 20,
n vaut 0 à 250, de préférence 3 à 220, de manière particulièrement préférée 5 à 200,
o vaut 0 à 250, de préférence 3 à 220, de manière particulièrement préférée 5 à 200,
a vaut 1 à 8, de préférence plus de 1 à 6, de manière particulièrement préférée 1, 2, 3 ou 4, étant entendu que la somme de m, n et o est égale ou supérieure à 1 et étant entendu qu'au moins A ou Z représente hydrogène.

**13.** Procédé selon la revendication 7, **caractérisé en ce que** les mono-ols sont choisis parmi l'éthanol, le propanol, l'isopropanol, le butanol, l'isobutanol et un polyétherol selon la formule (II), A ne représentant pas hydrogène.

**14.** Procédé selon la revendication 1 à 12, dans lequel on utilise au moins 1 mole de fonctionnalité OH liée au polyéther par mole de groupe acétoxy du siloxane ramifié, de préférence 1 à 2 moles de fonctionnalité OH liée au polyéther, de préférence 1,1 à 1,6 mole de fonctionnalité OH liée au polyéther, de manière particulièrement préférée 1,2 à 1,4 mole de fonctionnalité OH liée au polyéther par mole de groupe acétoxy du siloxane ramifié.

**15.** Procédé selon l'une des revendications susmentionnées, **caractérisé en ce que** la transestérification des polysiloxanes portant des groupes acétoxy de l'étape 2 est effectuée dans un solvant inerte dans les conditions de réaction, les solvants préférés étant le toluène et/ou les xylènes purs ou se trouvant sous forme de mélange d'isomères, et ces solvant étant utilisés de préférence en des quantités totales de 5 à 35% en poids, de préférence de 10 à 35% en poids, par rapport à la masse de la matrice de réaction et la teneur totale en eau du solvant étant $\leq$ 50 ppm en masse, de préférence $\leq$ 25 ppm en masse, de manière particulièrement préférée $\leq$ 10 ppm en masse, la détermination de la teneur en eau étant effectuée par titrage selon Karl Fischer.

**16.** Procédé selon l'une des revendications susmentionnées, **caractérisé en ce que** la réaction de transestérification est effectuée dans la plage de température de 40 à 180°C, de préférence entre 50 et 160°C, de manière particulièrement préférée entre 80 et 150°C.

**17.** Procédé selon l'une des revendications susmentionnées, **caractérisé en ce que** la réaction de transestérification est effectuée à une pression réduite et/ou en faisant passer un gaz inerte.

**18.** Utilisation d'une préparation produite selon un procédé des revendications 1 à 17, contenant au moins un polyéther de silicium ramifié, lié par SiOC, un polyétherol et un polyéther à groupes terminaux fermés par un groupe acétyle, étant entendu que le radical polyéther contenu dans le polyéther de silicium est chimiquement identique au radical de polyéther du polyétherol et au radical polyéther du polyéther à groupes terminaux fermés par un groupe acétyle et en ce que la proportion du polyéther de silicium ramifié, lié par SiOC est d'au moins 50% en masse par rapport à cette préparation totale, pour la production d'antimousses pour diesel, d'agents d'hydrofugation, de dispersions polymères, d'adhésifs ou de matériaux d'étanchéité, d'essuie-tout ; de formulations de nettoyage et d'entretien pour le ménage ou pour des applications industrielles, en particulier pour des assouplissants, de compositions cosmétiques, pharmaceutiques et dermatologiques, en particulier de formulations de nettoyage et de soin cosmétiques, d'agents de traitement des cheveux et d'agents de post-traitement des cheveux, de compositions pour la construction, de corps moulés thermoplastiques.

**19.** Utilisation de la préparation selon la revendication 18 comme adjuvant de procédé lors de l'extrusion de thermoplastiques, comme adjuvant dans la phytoprotection, comme additif pour le nettoyage et l'entretien de surfaces dures, pour le traitement de surface de fibres, de particules ou de structures planes, en particulier pour l'apprêt ou l'imprégnation de textiles ou lors du revêtement de charges.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2829906 A1
- CN 101100515 A
- DE 1012602
- DE 2443853
- US 4028218 A
- US 5147965 A
- JP S4819941 B
- EP 0475440 A
- DE 10312636
- DE 10359764
- EP 2094761 B1
- EP 3467006 A1
- EP 18172882
- EP 18172876
- EP 17204277
- EP 18189073
- EP 18189072
- EP 18189074
- EP 18210035
- EP 3438158 A1


### In der Beschreibung aufgeführte Nicht-Patentliteratur


- **J. BOYER ; R. J. P. CORRIU ; R. PERZ ; C. REYE.** *J. Organomet. Chem.,* 1978, vol. 157, 153-162